# EUROPEAN PATENT SPECIFICATION

(11) **EP 1 850 666 B1**
(45) Date of publication and mention of the grant of the patent: **08.08.2012**
(21) Application number: 05769042.2
(22) Date of filing: 23.06.2005
(51) Int. Cl.: A01N 27/00

(54) **COMPOSITION FOR USE IN CONTROLLING AEDES AEGYPTI MOSQUITOES**
ZUSAMMENSETZUNG FÜR DIE BEKÄMPFUNG VON MOSKITOS DER ART AEDES AEGYPTI
COMPOSITION DESTINEE A ETRE UTILISEE DANS LA LUTTE CONTRE LES MOUSTIQUES AEDES AEGYPTI

(30) Priority: 24.02.2005 IN DE04042005
(43) Date of publication of application: 07.11.2007
(73) Proprietor: Director General Defence Research & Development Organisation, New Delhi 110 066 (IN)
(72) Inventor: PRAKASH, Shri, Gwalior 474 002 M.P. (IN); MENDKI, Murlidhar J., Gwalior 474 002 M.P. (IN); GANESAN, Kumaran, Gwalior 474 002 M.P. (IN); GOPALAN, Natarajan, Gwalior 474 002 M.P. (IN); MALHOTRA, Ramesh C., Gwalior 474 002 M.P. (IN); CHANDEL, Kshitij, Gwalior 474 002 M.P. (IN); PARASHAR, Brahma Dutt, Gwalior 474 002 M.P. (IN); VIJAYARAGHAVAN, Rajagopalan, Gwalior 474 002 M.P. (IN); SEKHAR, Krishnamurthy, Gwalior 474 002 M.P. (IN)
(74) Representative: Senior, Janet
(86) International application number: PCT/IN2005/000211
(87) International publication number: WO 2006/090410

(56) References cited:
- DATABASE CA [Online] CHEMICAL ABSTRACTS SERVICE, COLUMBUS, OHIO, US; MENDKI, M. J. ET AL: "Heneicosane: an oviposition-attractant pheromone of larval origin in Aedes aegypti mosquito" XP002362001 retrieved from STN Database accession no. 2000:473766 & CURRENT SCIENCE , 78(11), 1295-1296 CODEN: CUSCAM; ISSN: 0011-3891, 2000,

## Description

### Field of the invention

The present invention relates to compositions for use in the control of dengue transmitting mosquito. In particular, the present invention relates to a composition for use in the control of dengue transmitting mosquito comprising of an oviposition attractant to attract *Aedes aegypti* mosquito to lay eggs at a predetermined site and a growth regulator, which inhibits the metamorphosis of larvae to adult mosquitoes. The present invention also relates to processes for preparation of such compositions. The present invention also relates to methods for controlling *Aedes aegypti* mosquito and use of the compositions of the present invention for controlling *Aedes aegypti* mosquitoes.

### Description of the prior art

Mosquitoes are medically important vectors, both in number of diseases they transmit and the magnitude of health problems world-wide. About 400 species of mosquitoes can spread disease to humans. These include yellow fever and dengue hemorrhagic fever for which the mosquitoes, *Aedes aegypti* and *Aedes albopictus* are the important vectors. According to the World Health Organization, at least 700 million people each year are infected with disease by mosquitoes.

Dengue fever is a serious disease of Asia and Africa. In India, public is aware of dengue haemorrhagic fever due to the epidemics in 1996 particularly in Delhi and surrounding regions. Classic dengue, known for its low mortality but very uncomfortable symptoms, has become more serious, both in frequency and mortality, in recent years. *Aedes aegypti* mosquito is the most prominent vector of dengue throughout the world. World wide at present there is no dengue vaccine. Therefore, mosquito control measures are the only remedy to this problem.

A variety of methods have been practised in the art in an attempt to control *Aedes* mosquitoes.

One of the methods used for the control of mosquito involves attract and kill devices which uses different combinations such as ultraviolet light, Carbondioxide, and 1-octen-3-ol to attract mosquitoes.

The main disadvantage of this method is that these devices are not efficient.

Yet another disadvantage of this method is that these devices are not suitable for control of mosquitoes in the field conditions.

Still another disadvantage of this method is that it is an expensive method for its public use.

Another method known in the art for controlling mosquitoes is the use of insecticides such as organophosphorus pesticides (malathion or fenitrothion), carbamates and synthetic pyrethroids by residual application or fogging to kill flying adult mosquitoes and, presumably, some mosquitoes resting on vegetation at that site.

The main drawback of this method is that it is suitable for control of mosquitoes in the field areas only as they are highly toxic in nature thus causing an environmental hazard.

Yet another drawback of this method is that more often mosquitoes develop insecticidal resistance.

Still another drawback of this method is that the adult mosquitoes which come into contact with the insecticides are only killed whereas the eggs/larvae/pupae are unaffected by this method.

Still another drawback of this method is that non-target organisms are also killed along with mosquitoes such as aquatic fish, etc. Thus it is not environment and eco-friendly.

Another method known in the art of control of mosquitoes involves larval management. This includes the use of chemical larvicides, microbial insecticides *(Bacillus thuringiensis B thuringiensis israeliensis),* larvicidal oils, juvenile hormone (methoprene), and mosquito predator fish to control mosquito larvae.

The main disadvantage of these methods is that they are suitable for use in ponds, canals, irrigated fields and some other freshwater sources for mosquito larval control only.

Another disadvantage of these methods is that closer surveillance is required to find out the larval breeding sites for the application of larvicides.

Still another disadvantage of microbial control and mosquito predator fish control methods are that they cannot be used in a container breeding mosquitoes like *Aedes aegypti.*

Further another disadvantage of these methods is that the mosquitoes develop resistance to microbial agents.

Yet another disadvantage of microbial larvicide is that it degrades faster in presence of sun light.

Another disadvantage of these methods, which are based on larvicides, is that they are not economical to use for the control of dengue transmitting mosquitoes.

Another disadvantage of the method using mosquito predator fish to eliminate mosquito larvae is that the life-period of the mosquito predator fish depends on the specific characteristics of the water like salinity. Maintenance of such conditions poses limitations for the practical application of this method.

Still another disadvantage of this method is that it cannot be used for monitoring the vector population.

Yet another disadvantage of these methods is that they are not cost effective.

Thus, there is an urgent need for a new mosquito control composition and method, which is simple to use, cost-effective, and environment and eco-friendly.

### Objects of the present invention

It is therefore, one of the main objects of the present invention to provide a composition for the control of dengue transmitting mosquito *Aedes aegypt,* which overcomes the disadvantages of the prior art.

Another object of the present invention is to provide an environment and eco-friendly composition for the control of dengue transmitting mosquito *Aedes aegypt,* which does not contain any toxic chemical.

Another object of the present invention is to provide a composition, which can be used easily in ovitraps, coolers, overhead tanks and other dengue transmitting mosquito breeding aquatic habitats.

Still another object of the present invention is to provide a novel chemical composition, which attracts dengue transmitting mosquitoes to lay eggs at a given site and control mosquito population by blocking the larval growth to adults.

Yet another object of the present invention is to provide a novel chemical composition which can be used for the control of breeding of dengue transmitting mosquitoes in indoor as well as outdoor applications.

Still another object of the present invention is to provide a novel chemical composition for the control of dengue transmitting mosquito *Aedes aegypt,* which does not affect the other beneficial insects in the same aquatic habitat.

Yet another object of the present invention is to provide a novel chemical composition for nearly 100% control of dengue transmitting mosquito *Aedes aegypti,* within 2 days of use.

### Summary of the invention

The present invention is based on the unexpected finding that an oviposition attractant pheromone of the dengue transmitting mosquito, *Aedes aegypti* ,in combination with a suitable growth regulator in proper composition prevents the development of *Aedes aegypti* at larval stage itself, thus controlling the mosquito population by 'lure and kill technique'.

Accordingly the present invention provides a `lure and kill' composition for luring *Aedes aegypti* mosquitoes to lay their eggs in a target site and killing the mosquito larvae or regulating the growth of mosquito larvae, comprising of an oviposition attractant pheromone n-heneicosane and an effective amount of an insect growth regulator in an inert carrier. The said chemical composition controls dengue transmitting mosquito population by attracting the females to lay eggs in water where it is applied and stops further development of larvae to adults. This chemical composition can be applied to any *Aedes aegypti* mosquito breeding in aquatic habitat.

The composition can be used in different formulations such as spray, tablets and lotions and it kills the larvae within two days after hatching from the egg. The mortality rate is 100%. This method *of Aedes aegypti* mosquito control is simple, cost-effective, efficient and eco-friendly.

The present invention also provides a `lure and kill' composition for luring *Aedes aegypti* mosquitoes to lay their eggs in a target site and killing the mosquito larvae or regulating the growth of mosquito larvae, which comprises (a) an effective amount of n-heneicosane dissolved in an organic solvent, and (b) an effective amount of an insect growth regulator dissolved in an organic solvent.

The present invention further provides a 'lure and kill' composition for luring *Aedes aegypti* mosquitoes to lay their eggs in a target site and killing the mosquito larvae or regulating the growth of mosquito larvae, which comprises an effective amount of n-heneicosane dissolved in a suitable organic solvent, and an effective amount of an insecticide.

In these embodiments, the present invention utilises a composition for luring *Aedes aegypti* mosquitoes to lay their eggs in a target site which comprises of an effective amount of n-heneicosame in a suitable organic solvent.

In a preferred feature, said solvent is selected from as petroleum ether, n-hepentane, n-hexane, methanol and dichloromethane.

In a preferred feature, the ratio of n-heneicosane to said solvent is, preferably, from 1:20 to 1:70.

A lure and kill composition of the invention further comprises an effective amount of an insect growth regulator or insecticide.

In a preferred feature of the invention the insecticide is a larvicide.

In a preferred feature of the invention, the insect growth regulator is selected from diflubenzuron, neemazal and triflumuron.

In a preferred feature of the invention, said insect growth regulator comprises 100 to 120 mg of diflubenzuron in 500 ml of an organic solvent selected from acetone and dichloromethane.

Preferably, said n-heneicosane concentration is 8 to 20 g, more preferably 10 to 12 g, per litre of the composition.

The present invention also provides a process for the preparation of a composition for the control of dengue transmitting mosquito having lure and kill property comprising of the steps of:
(a) preparing oviposition attractant solution by dissolving n-heneicosane in an organic solvent;
(b) preparing insect regulator solution by dissolving an insect growth regulator in an organic solvent;
(c) mixing the above two solutions thoroughly.

In a preferred feature, the ratio of n-heneicosane to said solvent is, preferably, from 1:20 to 1:70.

In a preferred feature, the insect growth regulator comprises 100-120 mg of diflubenzuron in 500 ml of an organic solvent selected from acetone and dichloromethane.

In a preferred feature, the process comprises preparing oviposition attractant solution by dissolving 8 to 20 g of n-heneicosane, preferably 10 - 12 g, in 500 ml of organic solvents like n-pentane, n-hexane or dichloromethane, preparing insect regulator solution by dissolving 800 - 2000 mg of insect growth regulator like diflubenzuron, preferably 100 - 120 mg, in 500 ml of organic solvents like acetone or dichloromethane and mixing the above two solutions thoroughly.

The present invention utilises n-heneicosane for luring *Aedes aegypti* mosquitoes to lay their eggs in a target site, and provides a method for the control of *Aedes aegypti* mosquitoes which comprises luring the mosquitoes to lay their eggs in a target site and killing the resulting larvae or regulating the growth of mosquito larvae, which method comprises treating the site with (a) an effective amount of n-heneicosane dissolved in an organic solvent and with (b) (i) an effective amount of an insect growth regulator dissolved in an organic solvent, or (ii) an effective amount of an insecticide.

According to the present invention a method for the control *of Aedes aegypti* mosquitoes may comprise treating the target site with an effective amount of a composition of the invention.

In one embodiment, a method for the control of *Aedes aegypti* mosquitoes comprises treating said target site with an effective amount of n-heneicosane dissolved in a suitable organic solvent, said composition further comprising an effective amount of an insect growth regulator or insecticide.

### Detailed Description

The present invention relates to the control *of Aedes aegypti* mosquitoes based on "lure and kill" technique. These mosquitoes are lured chemically to lay eggs only at a specific site. When the eggs are hatched, the entire larvae population can be destroyed. A composition comprising n-heneicosane used in the present invention ensures that the eggs are laid only in a specific site and not anywhere else.

The present invention is based on the unexpected finding that heneicosane, a C-21 hydrocarbon, is capable of acting as a most effective oviposition attractant. Thus, any standing water containing a dose of heneicosane will attract and lure *Aedes aegypti* mosquitoes to lay their eggs only in such water and no other. Subsequently, either during the larval stage or just before the eggs are hatched, an effective dosage of a conventional insecticide may be added to completely destroy the larvae.

In an alternative embodiment, heneicosane may be synergistically premixed with an insecticide so that the composition itself acts as a "lure and kill" composition.

The present invention also relates to a process for the preparation of compositions for use in lure and/or killing of *Aedes aegypti* mosquitoes. The present invention is based on the unexpected finding that *Aedes aegypti* mosquitoes tend to lay eggs in stagnant water where eggs of the same species of mosquitoes had been laid previously. This led the inventors to analyse various samples of water which in turn led to the finding that water in which eggs had previously been laid by *Aedes aegypti* mosquitoes and which had hatched into larval stage contained various semio-chemicals. Analysis of these semio-chemicals identified them as heneicosane, nonacosane, octadecane, isopropyl myristate and docosane. Of these five chemicals, heneicosane was found to be most effective oviposition attractant which chemically "invites" the mosquitoes to lay their eggs in the same place again and again. When stagnant water in which *Aedes aegypti* mosquitoes had bred earlier was left untouched the incidence of further egg laying in the same water and thriving of larval population increased. However, when such water was replaced by fresh water the incidence of egg laying decreased considerably and thereafter, gradually increased over a period of time. However, when stagnant water was kept alongside water containing heneicosane, the entire egg laying took place only in water containing heneicosane thereby clearly establishing that the *Aedes aegypti* mosquitoes were attracted to water containing heneicosane for the purposes of laying their eggs. Thus, the present invention makes it possible to lure *Aedes aegypti* mosquitoes to lay their eggs only at specific chosen sites making it possible to thereafter to destroy the entire larval population and control further breeding of the mosquitoes. This has a tremendous industrial application. It minimises the use of insecticides and therefore, wastage thereof, since in accordance with the present invention, the insecticides are required to be used only at specific target sites instead of over a large area. It also ensures that the insects do not escape. Spraying of insecticides over a large area offers tremendous opportunities to an adult mosquito to escape. On the contrary, present invention ensures that the entire larval population is congregated at a specific site where 100% killing thereof can be achieved.

The present invention also relates to a process for the preparation of the composition of the present invention. In the first aspect, the invention relates to preparation and isolation of heneicosane. In this embodiment, *Aedes aegypti* mosquitoes are bred and allowed to lay eggs in stagnant water. Once the eggs are hatched and during the larval stage thereof, the water is collected. This water is referred to as larval conditioned water (LCW). The semio-chemicals are thereafter extracted from the LCW. Conventional organic solvents such as petroleum, ether, hexane, dichloromethane, or methanol are used for the extraction of the semio-chemicals. The most preferred solvent is hexane. The extracted solution comprised of the following five somio-chemicals: heneicosane, nonacosane, octadecane, isopropyl myristate and docosane. From the mixture eof such five semio-chemicals, heneicosane is separated.

A composition comprising or containing heneicosane is sprayed into water referred to herein as target site. The composition may include any insecticide. In the next few days, there is a tremendous Incidence of egg laying activity by *Aedes aegypti* mosquitoes at the target site. The composition may already contain a conventional insecticide, which is effective against *Aedes aegypti* larvas. Alternatively, the target site is treated with a conventional insecticide or insect growth regulator such as diflubenzuron, neomazal, triflumuron. Diflubenzuron is the preferred insect growth regulator.

In a preferred embodiment, solutions of oviposition attractant containing heneicosane and insect growth regulator are prepared and kept separately. These two compositions are subsequently mixed in a predetermined ratio, preferably at a ratio of 1:1 The two compositions may be mixed either in advance or just prior to use.

The composition of the present invention has been found to be extremely effective in "lure and kill" technique against *Aedes aegypti* mosquitoes.

In a preferred embodiment, the process in accordance with the present invention for the preparation of new chemical composition for the control of dengue transmitting mosquitoes comprises of following steps:

### Step (a): Preparation of oviposition attractant solution:

*Aedes aegypti* mosquitoes are bred and the water is collected for isolation where the mosquitoes are at larval stage. This water is called as larval conditioned water (LCW). The semio-chemicals are extracted from the LCW by organic solvents such as petroleum ether, hexane, dichloromethane or methanol preferably hexane. The extractant is analysed by various spectral techniques like IR, NMR and GCMS and the five semio-chemicals identified are heneicosane, nonacosane, octadecane, isopropyl myristate and decosane. Amongst these heneicosane (C 21 hydrocarbon) is found to be the most effective oviposition attractant.

In a stoppered bottle, 1.6 to 2% w/v preferably 1.0-1.2% w/v of n-heneicosane is dissolved completely in n-pentane or n-hexane HPLC grade preferably n-hexane.

### Step (b): Preparation of insect growth regulator solution:

In a stoppered bottle, 0.16 to 0.2% w/v, preferably, 0.1 to 0.12% w/v of insect growth regulator like diflubenzuron, neemazal, triflumuron preferably diflubenzuron is dissolved completely in acetone HPLC grade.

### Step (c): Preparation of the chemical composition having lure and kill property:

The oviposition attractant solution prepared in step (a) and insect growth regulator solution prepared in step (b) are taken in a ratio of 1:1 and the mixture is shaken thoroughly. This composition can readily be used to control the dengue transmitting mosquitoes breeding by "lure and kill" technique.

The .above chemical composition can be used in different formulations such as spray, tablets and lotions. Extensive field trials with this chemical composition conducted after adequate precaution of confidentiality indicated that larvae after hatching from the eggs die within 2 days and the mortality rate is 100%. The water in ovitraps containing this chemical composition is found to be effective for 7 to 10 days to attract the *Aedes aegypti* to lay eggs and kill the larvae a second time after hatching from the eggs relaid in the same water. This method of mosquito control is simple, cost effective, efficient and eco-friendly.

In a preferred embodiment, the process for the preparation of the composition of the present invention comprises comprising of the steps of:
(a) preparing oviposition attractant solution by dissolving 8 to 20 g of n-heneicosane preferably 10-12 g in 500 ml of organic solvents like n-pentane, n-hexane or dichloromethane.
(b) preparing insect regulator solution by dissolving 800-2000 mg of insect growth regulator like diflubenzuron preferably 100-120 mg in 500 ml of organic solvents like acetone or dichloromethane.

The present invention will now be described in greater detail with the following examples. It be understood by a person skilled in the art that the examples are for illustrative purposes only and various modifications of the present invention are possible without departing from the spirit and scope thereof

### Example 1

### The following examples illustrate the process for preparing the composition of the present invention

To a 1 L stoppered bottle, 250 ml of or n-pentane (HPLC grade) is taken. To this 13 g of n-heneicosane g is added and the flask is shaken well to dissolve it completely.

250 ml of acetone HPLC grade is taken in another 500 ml of stoppered bottle. To this 100 mg of diflubenzuron is added and the flask is shaken well to dissolve it completely. This is transferred to the bottle containing the heneicosane solution and the mixture is shaken thoroughly. This composition is ready for use for the control of dengue transmitting mosquito breeding.

### Example 2

To a L stoppered bottle, 250 ml of n-hexane HPLC grade is taken. To this 10 g of n-heneicosane g is added and the flask is shaken well to dissolve it completely.

250 ml of acetone HPLC grade is taken in another 500 ml of stoppered bottle. To this 100 mg of diflubenzuron is added and the flask is shaken well to dissolve it completely. This is transferred to the bottle containing the heneicosane solution and the mixture is shaken thoroughly. This composition is ready for use for the control of dengue transmitting mosquito breeding.

### Example 3

To a L stoppered bottle, 250 ml of or n-pentane HPLC grade is taken. To this 20 g of n-heneicosane is added and the flask is shaken well to dissolve it completely.

250 of acetone HPLC grade is taken in another 500 ml of stoppered bottle. To this 150 mg of diflubenzuron is added and the flask is shaken well to dissolve it completely. This is transferred to the bottle containing the heneicosane solution and the mixture is shaken thoroughly. This composition is ready for use for the control of dengue transmitting mosquito breeding.

### EXAMPLE 4

### The following examples illustrate the effectiveness of the "luring" effect.

The following experiment was conducted under field conditions in a specially cordoned area to which public did not have any access. Fifteen open tanks with water filled to the top were kept in the open. All the tanks were made of same material, were of the same size and contained same amount of water from the same source. The tanks were numbered consecutively and allowed to remain for a week. After fifteen days all the tanks were examined and it was found that all the tanks contained nearly the same amount of larval population of *Aedes aegypti* mosquitoes. This establishes that the mosquitoes did not have any preference for any particular water tank.

All the fifteen tanks were drained of water and thoroughly cleaned. Subsequently, they were filled with water from the same source. In tank No. 1, a predetermined amount of a solution of heneicosane in n-hexane (1% w/v) was added. After fifteen days, water from each tank was analysed. It was found that only tank No. 1 containing the heneicosane contained mosquito larvae, thereby establishing that *Aedes aegypti* mosquitoes were clearly attracted and lured to lay eggs in water containing heneicosane.

### EXAMPLE 5

Example No. 4 was repeated 14 times with heneicosane being added in tank Nos. 2 to 15 consequentially. It was found that each time the tank containing heneicosane attracted *Aedes aegypti* mosquitoes to lay their eggs therein.

### EXAMPLE 6

Example Nos. 4 and 5 were repeated with heneicosane dissolved in n-pentane. The results were exactly the same.

### EXAMPLE 7

The above example was repeated with varying concentrations of heneicosane in the solvent. The concentration of 1.0 to 2% w/v was found to be most effective.

## Claims

1. A 'lure and kill' composition for luring *Aedes aegypti* mosquitoes to lay their eggs in a target site and killing the mosquito larvae or regulating the growth of mosquito larvae, which comprises (a) an effective amount of n-heneicosane dissolved in an organic solvent, and (b) an effective amount of an insect growth regulator dissolved in an organic solvent.

2. A composition as claimed in claim 1, wherein the insect growth regulator is selected from diflubenzuron, neemazal and triflumuron.

3. A composition as claimed in claim 1 or claim 2, wherein the concentration of n-heneicosane is from 8 to 20 g per litre of the composition.

4. A composition as claimed in claim 3, wherein the n-heneicosane concentration is 10-12 g per litre of the composition.

5. A composition as claimed in any one of claims 1 to 4, wherein component (a) comprises n-heneicosane dissolved in petroleum ether, n-pentane, n-hexane, methanol or dichloromethane.

6. A composition as claimed in claim 3, wherein the concentrations of n-heneicosane and insect growth regulator correspond to those of a composition prepared by mixing (a) 8 to 20 g of n-heneicosane in 500 ml of an organic solvent with (b) 800 to 2000 mg of insect growth regulator in 500ml of an organic solvent.

7. A composition as claimed in claim 6, wherein the n-heneicosane is pre-dissolved in n-pentane, n-hexane or dichoromethane, and mixed with insect growth regulator solution.

8. A composition as claimed in claim 6 or claim 7, wherein the insect growth regulator is diflubenzuron.

9. A composition as claimed in any one of claims 6 to 8, wherein the insect growth regulator is pre-dissolved in acetone or dichloromethane, and mixed with n-heneicosane solution.

10. A composition as claimed in any one of claims 7 to 9, which contains 10 to 12 g of n-heneicosane per litre of composition.

11. A composition as claimed in claim 1 or claim 2, wherein the concentrations of n-heneicosane and insect growth regulator correspond to those of a composition prepared by mixing, in a ratio of 1:1, 1.0 to 2 % w/v of n-heneicosane in n-pentane or n-hexane with 0.1 to 0.2 % w/v of an insect growth regulator in acetone.

12. A 'lure and kill' composition for luring *Aedes aegypti* mosquitoes to lay their eggs in a target site and killing the mosquito larvae or regulating the growth of mosquito larvae, which comprises
a) an effective amount of n-heneicosane, and
b) an effective amount of an insect growth regulator,
in an inert carrier.

13. A composition as claimed in claim 12, wherein the insect growth regulator is selected from diflubenzuron, neemazal and triflumuron

14. A composition as claimed in claim 12 or claim 13, which is in the form of a spray.

15. A 'lure and kill' composition for luring *Aedes aegypti* mosquitoes to lay their eggs in a target site and killing the mosquito larvae or regulating the growth of mosquito larvae, which comprises an effective amount of n-heneicosane dissolved in a suitable organic solvent, and an effective amount of an insecticide.

16. A composition as claimed in claim 15, wherein the insecticide is a larvicide.

17. A process for the preparation of a composition for the control of dengue transmitting mosquito *Aedes aegypti,* comprising of the steps of:
(a) preparing oviposition attractant solution by dissolving n-heneicosane in an organic solvent;
(b) preparing insect regulator solution by dissolving an insect growth regulator in an organic solvent; and
(c) mixing the above two solutions thoroughly.

18. A process as claimed in claims 17, wherein the insect growth regulator is a larvicide.

19. A process as claimed in claim 18, wherein the insect growth regulator is selected from diflubenzuron, neemazal and triflumuron.

20. A process as claimed in any one of claims 17 to 19, wherein the concentration of n-heneicosane is from 8 to 20 g per litre of the composition.

21. A process as claimed in claim 20, wherein said n-heneicosane concentration is 10-12 g per litre of the composition.

22. A process as claimed in any one of claims 17 to 21, wherein in step (a) the n-heneicosane is dissolved in petroleum ether, n-pentane, n-hexane, methanol or dichloromethane.

23. A process as claimed in claim 20, which comprises
(a) preparing oviposition attractant solution by dissolving 8 to 20 g of n-heneicosane in 500 ml of organic solvent,
(b) preparing insect regulator solution by dissolving 800-2000 mg of insect growth regulator in 500 ml of organic solvent, and
(c) mixing the above two solutions thoroughly.

24. A process as claimed in any one of claims 17 to 19, which comprises mixing, in a ratio of 1:1, 1.0 to 2 % w/v of n-heneicosane in n-pentane or n-hexane with 0.1 to 0.2 % w/v of an insect growth regulator in acetone.

25. A method for the control *of Aedes aegypti* mosquitoes which comprises luring the mosquitoes to lay eggs in a target site and killing the resulting larvae or regulating the growth of mosquito larvae by treating the site with (a) an effective amount of n-heneicosane dissolved in an organic solvent, and with (b) (i) an effective amount of an insect growth regulator dissolved in an organic solvent, or (ii) an effective amount of an insecticide.

26. A method as claimed in claim 25, wherein the treatment is carried out with a composition according to any one of claims 2 to 11.

27. A method as claimed in claim 25 or claim 26, wherein components (a) and (bi) are mixed in advance or just prior to use.

28. A method for the control *of Aedes aegypti* mosquitoes which comprises luring the mosquitoes to lay eggs in a target site and killing the resulting larvae or regulating the growth of mosquito larvae by treating the site with a composition as claimed in any one of claims 12 to 16.

## Patentansprüche

1. Zusammensetzung vom Typ 'Anlocken und Vernichten' ('Lure and Kill'), um Stechmücken der Art *Aedes aegypti* anzulocken, ihre Eier an einen Zielort zu legen, und um die Stechmückenlarven zu töten oder das Wachstum der Stechmückenlarven zu regeln, welche (a) eine wirksame Menge an n-Heneicosan, das in einem organischen Lösungsmittel gelöst ist, und (b) eine wirksame Menge eines Wachstumsreglers für Insekten, der in einem organischen Lösungsmittel gelöst ist, umfasst.

2. Zusammensetzung, wie in Anspruch 1 beansprucht, wobei der Wachstumsregler für Insekten aus Diflubenzuron, Neemazal und Triflumuron ausgewählt wird.

3. Zusammensetzung, wie in Anspruch 1 oder in Anspruch 2 beansprucht, wobei die Konzentration an n-Heneicosan von 8 bis 20 g pro Liter der Zusammensetzung beträgt.

4. Zusammensetzung, wie in Anspruch 3 beansprucht, wobei die n-Heneicosan-Konzentration 10 bis 12 g pro Liter der Zusammensetzung beträgt.

5. Zusammensetzung, wie in einem der Ansprüche 1 bis 4 beansprucht, wobei die Komponente (a) n-Heneicosan umfasst, das in Petrolether, n-Pentan, n-Hexan, Methanol oder Dichlormethan gelöst ist.

6. Zusammensetzung, wie in Anspruch 3 beansprucht, wobei die Konzentrationen an n-Heneicosan und Wachstumsregler für Insekten denen einer Zusammensetzung entsprechen, die hergestellt wird, indem (a) 8 bis 20 g n-Heneicosan in 500 ml eines organischen Lösungsmittels mit (b) 800 bis 2000 mg Wachstumsregler für Insekten in 500 ml eines organischen Lösungsmittels gemischt werden.

7. Zusammensetzung, wie in Anspruch 6 beansprucht, wobei das n-Heneicosan in n-Pentan, n-Hexan oder Dichlormethan vorab gelöst ist, und mit einer Lösung von Wachstumsregler für Insekten gemischt ist.

8. Zusammensetzung, wie in Anspruch 6 oder in Anspruch 7 beansprucht, wobei der Wachstumsregler für Insekten Diflubenzuron ist.

9. Zusammensetzung, wie in einem der Ansprüche 6 bis 8 beansprucht, wobei der Wachstumsregler für Insekten in Aceton oder Dichlormethan vorab gelöst ist, und mit n-Heneicosan-Lösung gemischt ist.

10. Zusammensetzung, wie in einem der Ansprüche 7 bis 9 beansprucht, welche 10 bis 12 g n-Heneicosan pro Liter der Zusammensetzung enthält.

11. Zusammensetzung, wie in Anspruch 1 oder in Anspruch 2 beansprucht, wobei die Konzentrationen an n-Heneicosan und Wachstumsregler für Insekten denen einer Zusammensetzung entsprechen, die hergestellt wird, indem 1,0 bis 2% w/v n-Heneicosan in n-Pentan oder n-Hexan mit 0,1 bis 0,2% w/v eines Wachstumsreglers für Insekten in Aceton im Verhältnis 1:1 gemischt werden.

12. Zusammensetzung vom Typ 'Anlocken und Vernichten' ('Lure and Kill'), um Stechmücken der Art *Aedes aegypti* anzulocken, ihre Eier an einen Zielort zu legen, und um die Stechmückenlarven zu töten oder das Wachstum der Stechmückenlarven zu regeln, welche
(a) eine wirksame Menge an n-Heneicosan, und
(b) eine wirksame Menge eines Wachstumsreglers für Insekten in einem inerten Träger umfasst.

13. Zusammensetzung, wie in Anspruch 12 beansprucht, wobei der Wachstumsregler aus Diflubenzuron, Neemazal und Triflumuron, ausgewählt wird.

14. Zusammensetzung, wie in Anspruch 12 oder in Anspruch 13 beansprucht, welche in Form eines Sprays ist.

15. Zusammensetzung vom Typ 'Anlocken und Vernichten' ('Lure and Kill'), um Stechmücken der Art *Aedes aegypti* anzulocken, ihre Eier an einen Zielort zu legen, und um die Stechmückenlarven zu töten oder das Wachstum der Stechmückenlarven zu regeln, welche eine wirksame Menge an n-Heneicosan, das in einem geeigneten organischen Lösungsmittel gelöst ist, und eine wirksame Menge eines Insektizides umfasst.

16. Zusammensetzung, wie in Anspruch 15 beansprucht, wobei das Insektizid ein Larvizid ist.

17. Verfahren zur Herstellung einer Zusammensetzung für die Kontrolle von Dengue-Fieber-übertragenden Stechmücken der Art *Aedes aegypti,* umfassend die folgenden Schritte:
(a) Herstellen einer Lösung eines Lockmittels für die Eiablage, indem n-Heneicosan in einem organischen Lösungsmittel gelöst wird;
(b) Herstellen einer Lösung eines Insektenreglers, indem ein Wachstumsregler für Insekten in einem organischen Lösungsmittel gelöst wird; und
(c) gründliches Mischen der beiden obigen Lösungen.

18. Verfahren, wie in Anspruch 17 beansprucht, wobei der Wachstumsregler für Insekten ein Larvizid ist.

19. Verfahren, wie in Anspruch 18 beansprucht, wobei der Wachstumsregler für Insekten aus Diflubenzuron, Neemazal und Triflumuron ausgewählt wird.

20. Verfahren, wie in einem der Ansprüche 17 bis 19 beansprucht, wobei die Konzentration an n-Heneicosan von 8 bis 20 g pro Liter der Zusammensetzung beträgt.

21. Verfahren, wie in Anspruch 20 beansprucht, wobei die n-Heneicosan-Konzentration 10 bis 12 g pro Liter der Zusammensetzung beträgt.

22. Verfahren, wie in einem der Ansprüche 17 bis 21 beansprucht, wobei in Schritt (a) das n-Heneicosan in Petrolether, n-Pentan, n-Hexan, Methanol oder Dichlormethan gelöst wird.

23. Verfahren, wie in Anspruch 20 beansprucht, welches umfasst:
(a) Herstellen einer Lösung eines Lockmittels für die Eiablage, indem 8 bis 20 g n-Heneicosan in 500 ml eines organischen Lösungsmittels gelöst werden,
(b) Herstellen einer Lösung eines Insektenreglers, indem 800 bis 2000 mg Wachstumsregler für Insekten in 500 ml eines organischen Lösungsmittels gelöst werden, und
(c) gründliches Mischen der beiden obigen Lösungen.

24. Verfahren, wie in einem der Ansprüche 17 bis 19 beansprucht, welches ein Mischen von 1,0 bis 2% w/v n-Heneicosan in n-Pentan oder n-Hexan mit 0,1 bis 0,2% w/v eines Wachstumsreglers für Insekten in Aceton in einem Verhältnis von 1:1 umfasst.

25. Verfahren für die Kontrolle von Stechmücken der Art *Aedes aegypti,* welches das Anlocken der Stechmücken, damit sie Eier an einen Zielort legen, und das Töten der resultierenden Larven oder das Regeln des Wachstums der Stechmückenlarven durch Behandeln des Ortes mit (a) einer wirksamen Menge an n-Heneicosan, das in einem organischen Lösungsmittel gelöst ist, und mit (b)(i) einer wirksamen Menge eines Wachstumsreglers für Insekten, der in einem organischen Lösungsmittel gelöst ist, oder (ii) einer wirksamen Menge eines Insektizides umfasst.

26. Verfahren, wie in Anspruch 25 beansprucht, wobei die Behandlung mit einer Zusammensetzung nach einem der Ansprüche 2 bis 11 ausgeführt wird.

27. Verfahren, wie in Anspruch 25 oder in Anspruch 26 beansprucht, wobei die Komponenten (a) und (b)(i) im Voraus oder direkt vor Verwendung gemischt werden.

28. Verfahren für die Kontrolle von Stechmücken der Art *Aedes aegypti,* welches das Anlocken der Stechmücken, damit sie Eier an einen Zielort legen, und das Töten der resultierenden Larven oder das Regeln des Wachstums der Stechmückenlarven durch Behandeln des Ortes mit einer Zusammensetzung, wie in einem der Ansprüche 12 bis 16 beansprucht, umfasst.

## Revendications

1. Une composition "lure and kill" ("attirer et tuer") pour attirer les moustiques *Aedes aegypti* de manière à ce qu'ils pondent leurs oeufs dans un site cible et pour tuer les larves de moustiques ou réguler la croissance des larves de moustiques, qui comprend (a) une quantité efficace de n-heneicosane dissoute dans un solvant organique, et (b) une quantité efficace d'un régulateur de croissance d'insectes dissoute dans un solvant organique.

2. Une composition selon la revendication 1, dans laquelle le régulateur de croissance d'insectes est sélectionné parmi le diflubenzuron, le neemazal et le triflumuron.

3. Une composition selon la revendication 1 ou la revendication 2, dans laquelle la concentration de n-heneicosane est de 8 à 20 g par litre de composition.

4. Une composition selon la revendication 3, dans laquelle la concentration de n-heneicosane est de 10 à 12 g par litre de composition.

5. Une composition selon l'une quelconque des revendications 1 à 4, **caractérisé en ce que** le composant (a) comprend du n-heneicosane dissous dans de l'éther de pétrole, du n-pentane, du n-hexane, du méthanol ou du dichlorométhane.

6. Une composition selon la revendication 3, dans laquelle les concentrations en régulateur de croissance d'insectes et en n-heneicosane correspondent à celles d'une composition préparée en mélangeant (a) de 8 à 20 g de n-heneicosane dans 500 ml d'un solvant organique avec (b) de 800 à 2000 mg de régulateur de croissance d'insectes dans 500 ml d'un solvant organique.

7. Une composition selon la revendication 6, dans laquelle le n-heneicosane est préalablement dissous dans du n-pentane, du n-hexane ou du dichlorométhane, et est mélangé avec une solution de régulateur de croissance d'insectes.

8. Une composition selon la revendication 6 ou la revendication 7, dans laquelle le régulateur de croissance d'insectes est le diflubenzuron.

9. Une composition selon l'une quelconque des revendications 6 à 8, dans laquelle le régulateur de croissance d'insectes est pré-dissous dans de l'acétone ou du dichlorométhane, et est mélangé avec une solution de n-heneicosane.

10. Une composition selon l'une quelconque des revendications 7 à 9, qui contient 10 à 12 g de n-heneicosane par litre de composition.

11. Une composition selon la revendication 1 ou la revendication 2, dans laquelle les concentrations en n-heneicosane et en régulateur de croissance d'insectes correspondent à celles d'une composition préparée en mélangeant, dans un rapport de 1:1, de 1,0 à 2% p/v de n-heneicosane dans du n-pentane ou du n-hexane avec de 0,1 à 0,2% p/v d'un régulateur de croissance d'insectes dans de l'acétone.

12. Une composition "lure and kill" ("attirer et tuer") pour attirer des moustiques *Aedes aegypti* de manière à ce qu'ils pondent leurs oeufs dans un site cible et pour tuer les larves de moustiques ou réguler la croissance des larves de moustiques, qui comprend
a) une quantité efficace de n-heneicosane, et
b) une quantité efficace d'un régulateur de croissance d'insectes,
dans un support inerte.

13. Une composition selon la revendication 12, dans laquelle le régulateur de croissance d'insectes est sélectionné parmi le diflubenzuron, le neemazal et le triflumuron.

14. Une composition selon la revendication 12 ou la revendication 13, qui est sous la forme d'un spray.

15. Une composition "lure and kill" ("attirer et tuer") pour attirer des moustiques *Aedes aegypti* de manière à ce qu'ils pondent leurs oeufs dans un site cible et pour tuer les larves de moustiques ou réguler la croissance des larves de moustiques, qui comprend une quantité efficace de n-heneicosane dissoute dans un solvant organique approprié, et une quantité efficace d'un insecticide.

16. Une composition selon la revendication 15, dans laquelle l'insecticide est un larvicide.

17. Un procédé pour la préparation d'une composition pour le contrôle du moustique transmetteur de la dengue *Aedes aegypti,* comprenant des étapes consistant à
(a) préparer une solution attractive pour la ponte des oeufs en dissolvant du n-heneicosane dans un solvant organique ;
(b) préparer une solution de régulation d'insectes en dissolvant un régulateur de croissance d'insectes dans un solvant organique ; et
(c) mélanger intimement les deux solutions ci-dessus.

18. Un procédé tel que revendiqué dans la revendication 17, dans lequel le régulateur de croissance d'insectes est un larvicide.

19. Un procédé tel que revendiqué dans la revendication 18, dans lequel le régulateur de croissance d'insectes est sélectionné parmi le diflubenzuron, le neemazal et le triflumuron.

20. Un procédé tel que revendiqué dans l'une des revendications 17 à 19, dans lequel la concentration de n-heneicosane est de 8 à 20 g par litre de composition.

21. Un procédé tel que revendiqué dans la revendication 20, dans lequel ladite concentration de n-heneicosane est de 10 à 12 g par litre de composition.

22. Un procédé tel que revendiqué dans l'une des revendications 17 à 21, dans lequel à l'étape (a) le n-heneicosane est dissous dans de l'éther de pétrole, du n-pentane, du n-hexane, du méthanol ou du dichlorométhane.

23. Un procédé tel que revendiqué dans la revendication 20, qui comprend le fait de :
(a) préparer une solution attractive pour la ponte des oeufs en dissolvant de 8 à 20 g de n-heneicosane dans 500 ml de solvant organique,
(b) préparer une solution de régulation d'insectes en dissolvant de 800 à 2000 mg de régulateur de croissance d'insectes dans 500 ml de solvant organique, et
(c) mélanger intimement les deux solutions ci-dessus.

24. Un procédé tel que revendiqué dans l'une des revendications 17 à 19, qui comprend le mélange, dans un rapport de 1:1, de 1,0 à 2% p/v de n-heneicosane dans du n-pentane, du n-hexane avec de 0,1 à 0,2% p/v d'un régulateur de croissance d'insectes dans de l'acétone.

25. Une méthode pour le contrôle des moustiques *Aedes aegypti,* qui comprend le fait d'attirer des moustiques de manière à ce qu'ils pondent des oeufs dans un site cible et de tuer les larves qui en résultent ou de réguler la croissance des larves de moustiques en traitant le site avec (a) une quantité efficace de n-heneicosane organique dissoute dans un solvant, et (b) (i) une quantité efficace d'un régulateur de croissance d'insectes dissoute dans un solvant organique, ou (ii) une quantité efficace d'un insecticide.

26. Une méthode selon la revendication 25, dans laquelle le traitement est effectué avec une composition selon l'une quelconque des revendications 2 à 11.

27. Une méthode selon la revendication 25 ou la revendication 26, dans laquelle les composants (a) et (bi) sont mélangés à l'avance ou juste avant l'utilisation.

28. Une méthode pour le contrôle des moustiques *Aedes aegypti,* qui comprend le fait d'attirer les moustiques de manière à ce qu'ils pondent des oeufs dans un site cible et de tuer les larves qui en résultent ou de réguler la croissance des larves de moustiques en traitant le site avec une composition telle que revendiquée dans l'une des revendications 12 à 16.
